# EUROPÄISCHE PATENTSCHRIFT

(11) **EP 3 254 549 B1**
(45) Veröffentlichungstag und Bekanntmachung des Hinweises auf die Patenterteilung: **20.03.2019**
(21) Anmeldenummer: 16173514.7
(22) Anmeldetag: 08.06.2016
(51) Int. Cl.: A01B 73/02, A01D 78/10

(54) **LANDMASCHINE**
AGRICULTURAL MACHINE
ENGIN AGRICOLE

(43) Veröffentlichungstag der Anmeldung: 13.12.2017
(73) Patentinhaber: Kverneland Group Kerteminde AS, 5300 Kerteminde (DK)
(72) Erfinder: Fritz, Christoph, 78465 Dingelsdorf (DE); Gohl, Stefan, 78244 Gottmadingen (DE)
(74) Vertreter: Grünecker Patent- und Rechtsanwälte PartG mbB

(56) Entgegenhaltungen:
- DE-A1- 10 120 845
- DE-B4-102012 009 073
- FR-A1- 2 882 622

## Beschreibung

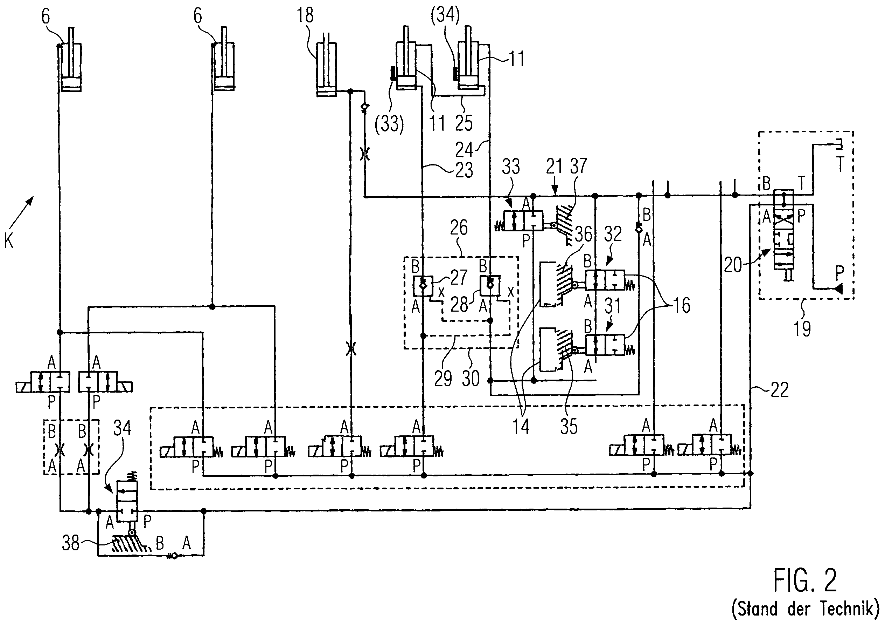

Die Erfindung betrifft eine Landmaschine der im Oberbegriff des Patentanspruchs 1 angegebenen Art.
Bei dem bekannten Kreiselschwader des Typs ANDEX 1103 und 1104, vertrieben unter der Marke VICON der Kverneland Group sind im Hydraulikkreis der Hubzylinder und der Teleskopier-Zylinder (siehe Fig. 2) insgesamt vier Endlagen-Schaltventile vorgesehen, die an sich Kollisionsstellungen jedes Hubarms verhindern, sofern nicht bestimmte "sichere" Relativpositionen zwischen den Kreiselrechen und z. B. dem Tragrahmen vorliegen. Die Hubarme werden nämlich in der Transportstellung so einteleskopiert, dass innere Hubarmteile über die Position der Schwenklager der Hubarme nach unten ragen, um trotz großer Kreiseldurchmesser die vorgeschriebene Transporthöhe einzuhalten. Um die Hubarme aus der Transportstellung wieder in Richtung zur Arbeitsstellung ausklappen zu können, müssen zuvor die inneren Hubarmteile relativ zum Schwenklager soweit angehoben werden, dass sie nicht mehr mit einem tragrahmenfesten Anschlag kollidieren, der an sich z. B. zur Einhaltung einer minimalen Arbeitsbreite in der Arbeitsstellung vorgesehen ist. Die Endlagen-Schaltventile können jedoch unter den robusten Einsatzbedingungen des Kreiselschwaders, durch Witterungseinflüsse, oder Beschädigung zumindest zum Teil ausfallen, sodass der Landwirt die Hubarme bereits auszuklappen beginnen kann, obwohl die inneren Hubarmteile noch nicht ausreichend angehoben sind. Außerdem ist aus der Praxis bekannt, dass Landwirte aus Unwissen oder zur Zeiteinsparung bewusst versuchen, entweder die Sicherheitseinrichtungen im Hydraulikkreis zu überlisten oder die Hubarme schon auszuklappen, ehe die inneren Hubarmteile ausreichend hoch hochgestellt sind. Beides resultiert in kritischen Kollisionsstellungen der Hubarme. Dabei entsteht aus dem Zusammenspiel zwischen dem inneren Hubarmteil und dem tragrahmenfesten Anschlag eine starke Zugkraft für den jeweiligen Teleskopier-Zylinder, und eine exzessive Druckerhöhung auf der Kolbenstangenseite, die über das dann sperrende Rückschlagventil in der Arbeitsleitung nicht abgebaut werden kann. Es kommt dann zu Schäden am Tragrahmen, den Hubarmen oder den Teleskopier-Zylindern bzw. den Hubzylindern.
Weiterer Stand der Technik ist enthalten in FR 2 882 622 A1, DE 101 20 845 A1, EP 1 949 781 A1, DE 10 2012 099 073 B4 und DE 692 02 821 T2.

Der Erfindung liegt die Aufgabe zugrunde, eine Landmaschine der eingangs genannten Art mit erhöhtem Sicherheitsstandard gegen Schäden aus möglichen Kollisionsstellungen der Hubarme zu schaffen.

Die gestellte Aufgabe wird mit den Merkmalen des Patentanspruchs 1 gelöst.

Kommt es im Betrieb der Landmaschine zu einer Kollisionsstellung, aus der eine unkontrollierte Druckerhöhung an einer Kolbenseite des Teleskopier-Zylinders resultiert, so spricht die Überdrucksicherung in der Bypassleitung an und lässt Druckmittel von einer Kolbenseite zur anderen Kolbenseite überströmen, um einen Schaden zu vermeiden. Hiermit braucht der Hydraulikkreis keine weiteren Sicherheitseinrichtungen wie Endlagenschaltventile oder Sensoren mehr.

Zweckmäßig spricht die Überdrucksicherung in Strömungsrichtung von der Kolbenstangenseite zur Kolbenseite des als Zugzylinder verbauten Teleskopier-Zylinders an.

Hierbei wird bewusst genutzt, dass in dieser Situation zwar die Drücke an der Kolbenseite und an der Kolbenstangenseite durch die Rückschlagventile sozusagen eingesperrt sind, jedoch bei einem Teleskopier-Zylinder mit Kolbenstange bei einem Hubinkrement des Kolbens und Herausziehen der Kolbenstange von der Kolbenstangenseite ein durch den Querschnitt der Kolbenstange kleineres Volumen problemlos zur Kolbenseite verdrängt werden kann, bzw. sich das Volumen an der Kolbenseite stärker vergrößert als sich das Volumen an der Kolbenstangenseite gleichzeitig verkleinert. Dies soll nicht ausschließen, die Überdrucksicherung alternativ bei als Druckzylinder verbautem Teleskopier-Zylinder einzusetzen.

Baulich einfach und betriebssicher weist die Überdrucksicherung ein von der Kolbenstangenseite vorgesteuertes Druckbegrenzungsventil auf. Das Druckbegrenzungsventil sperrt normalerweise die Bypassleitung, und spricht erst an, wenn die Vorsteuerung ein kritisches Druckniveau an der Kolbenstangenseite meldet. Der Ansprechdruck des Druckbegrenzungsventils ist, vorzugsweise, einstellbar, um für den jeweiligen Maschinentyp optimale Sicherheit zu gewährleisten.

Beispielsweise ist der Ansprechdruck der Überdrucksicherung um etwa 20 % höher als der Druck, der zum gesteuerten Beaufschlagen der Kolbenstangenseite (Einfahren) über das Rückschlagventil eingespeist wird. Die Drücke können beispielsweise 250 bar gegenüber 200 bar betragen. Für die vorbestimmten relativen Druckverhältnisse kann optional eine stromauf der Überdrucksicherung in der Bypassleitung angeordnete Drossel das Ansprechverhalten des Teleskopier-Zylinders, z.B. bei gesteuertem Ausfahren, verbessern.

Bei einer zweckmäßigen Ausführungsform ist der äußere Hubarmteil in einem in einer tragrahmenfesten Konsolenstruktur angeordneten Schwenklager angelenkt, und weist die Konsolenstruktur innen in einem etwa der halben Breite des äußeren Hubarmteils entsprechenden Abstand vom Schwenklager einen Anschlag auf, an dem bei zur Transportstellung voll hochgeschwenktem Hubarm der innere Hubarmteil vorbeiführbar, und an den bei zur Arbeitsstellung oder Vorgewendestellung abgesenktem Hubarm ein inneres Ende des inneren Hubarmteils anlegbar ist, vorzugsweise in der Arbeitsstellung oder der Vorgewendestellung zur Begrenzung einer minimalen Arbeitsbreite, mit der sichergestellt ist, dass die Arbeitsgeräte an den Hubarmen nicht miteinander oder mit dem Tragrahmen kollidieren. Der Anschlag kann eine Doppelfunktion ausführen, weil er in der Transportstellung den Hubarm gegen Ausklappen bei Anlage des inneren abgesenkten Hubarmteils sichert, hingegen in der Arbeitsstellung oder Vorgewendestellung verhindert, dass die minimale vorgeschriebene Arbeitsbreite unterschritten wird.

Gemäß einem wichtigen Aspekt der Erfindung zieht in bewusst oder unbewusst durch zumindest teilweises Ausklappen des zunächst voll hochgeschwenkten Hubarms auftretenden Kollisionsstellungen der innere Hubarmteil bei Anlage am Anschlag die Kolbenstange des Teleskopier-Zylinders aus, sodass an der Kolbenstangenseite zum Rückschlagventil Überdruck aufgebaut wird, dann jedoch über die ansprechende Überdrucksicherung Druckmittel von der Kolbenstangenseite zur Kolbenseite verdrängt wird. Dadurch bleibt der Druck an der Kolbenstangenseite trotz des sperrenden Rückschlagventils soweit begrenzt, dass keine Schäden zu befürchten sind, sondern der Teleskopier-Zylinder weiter ausgezogen wird, wenn der Hubarm in der Kollisionsstellung weiter ausklappt. Dies schließt nicht aus den Teleskopier-Zylinder so zu verbauen, dass er als Druckzylinder unter der Kraft eingefahren wird

Eine zweckmäßige Ausführungsform kann eine Kombination aus der Überdrucksicherung und Kollisionsstellungen des Hubarms an sich verhindernden Endlagen-Schaltventilen oder Positionssensoren im Hydraulikkreis aufweisen. Die Überdrucksicherung ist somit ein zusätzlicher Sicherheitsaspekt für den Fall eines Ausfalls oder teilweisen Ausfalls der Funktion der anderen Sicherheitseinrichtungen.

Bei einer zweckmäßigen Ausführungsform sind mindestens zwei gegensinnig schwenkbare Hubarme am Tragrahmen vorgesehen, sind die Teleskopier-Zylinder der Hubarme parallel geschaltet und gleichzeitig über ein Richtungssteuerventil mit gesperrter Neutralstellung und einen Mengenteiler für die kolbenseitigen Arbeitsleitungen ausfahrbar und über zusammengefasste kolbenstangenseitige Arbeitsleitungen gleichzeitig einfahrbar, wobei jedem Teleskopier-Zylinder zwei Rückschlagventile und eine Überdrucksicherung mit Bypassleitung zugeordnet sind. Dies soll jedoch nicht ausschließen, die beiden Teleskopier-Zylinder als Masterzylinder und Slave-Zylinder zu schalten und die beiden Rückschlagventile beiden Teleskopier-Zylindern gemeinsam zuzuordnen.

Ferner ist es denkbar, dass sich parallel geschaltete Teleskopier-Zylinder in einer Bypassleitung eine gemeinsame Überdrucksicherung teilen.

Schließlich sind die Arbeitsgeräte an den Hubarmen entweder Rechkreisel beispielsweise eines Kreiselschwaders oder Mäheinheiten einer Mähmaschine.

Anhand der Zeichnungen werden Ausführungsformen der Erfindung sowie ein Hydraulikkreis des Standes der Technik erläutert. Es zeigen:
Fig. 1 eine Perspektivdarstellung einer Landmaschine, hier beispielsweise eines Kreiselschwaders mit zwei Rechkreiseln, in einer Arbeitsstellung,
Fig. 2 ein Blockschaltbild eines Hydraulikkreises eines bekannten Kreiselschwaders ANDEX , als Stand der Technik,
Fig. 3 Komponenten der Landmaschine von Fig. 1 in Transportstellung eines Hubarms,
Fig. 4 eine Kollisionsstellung des Hubarms von Fig. 3,
Fig. 5 ein vereinfachtes Blockschaltbild eines erfindungsgemäßen Hydraulikkreises,
Fig. 6 einen Teil eines Hydraulikkreises als weitere Ausführungsform der Erfindung, und
Fig. 7 einen Teil eines Blockschaltbildes eines Hydraulikkreises als weitere Ausführungsform der Erfindung.

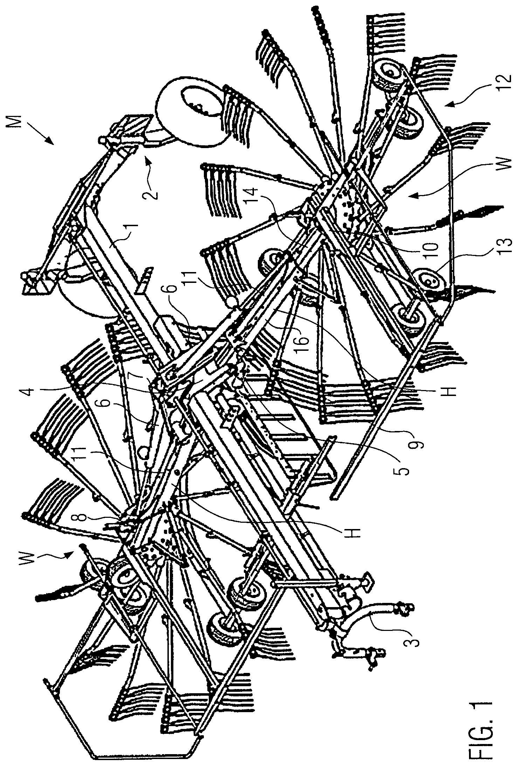

Die in Fig. 1 gezeigte Landmaschine M wird als nicht beschränkendes Beispiel als Kreiselschwader mit zwei als Rechkreisel 12 ausgebildeten Arbeitsgeräten W erläutert. Die Erfindung ist analog in anderen Landmaschinen anwendbar, bei denen Arbeitsgeräte mit Hubarmen verstellt werden, und die Einhaltung der Transporthöhe in einer Transportstellung ein wichtiger Gesichtspunkt ist, beispielsweise in Mähmaschinen oder ähnlichen anderen Landmaschinen.

Die Landmaschine M in Fig. 1 weist einen ein Fahrwerk 2 aufweisenden Tragrahmen 1 auf, der mit einem in Arbeitsfahrtrichtung vorne liegenden Bügel 3 an einen Schlepper anschließbar ist, der mechanische und/oder hydraulische Antriebsenergie für die Landmaschine M zur Verfügung stellt, obwohl die Landmaschine M alternativ eine eigene Antriebsversorgung haben könnte.

An einer Konsolenstruktur 4 des Tragrahmens 1 sind hier an beiden Seiten des Tragrahmens 1 Hubarme H in Schwenklagern 5 mit etwa zum Tragrahmen 1 parallelen Schwenkachsen schwenkbar angelenkt. Jeder Hubarm H trägt wenigstens ein Arbeitsgerät W, ist längenverstellbar und wird durch wenigstens einen zwischen einem Lager 7 an der Konsolenstruktur 4 und einem Widerlager 8 am Hubarm H angeordneten Hubzylinder 6 verschwenkt, und zwar zwischen einer in Fig. 1 gezeigten Arbeitsstellung, in der das Arbeitsgerät W beispielsweise mit Bodenlaufrädern 13 auf dem Boden geschleppt wird, über eine nicht gezeigte, nur etwas angehobene Vorgewendestellung zum Passieren eines Vorgewendes, bis in eine voll hochgeschwenkte Stellung bzw. Transportstellung.

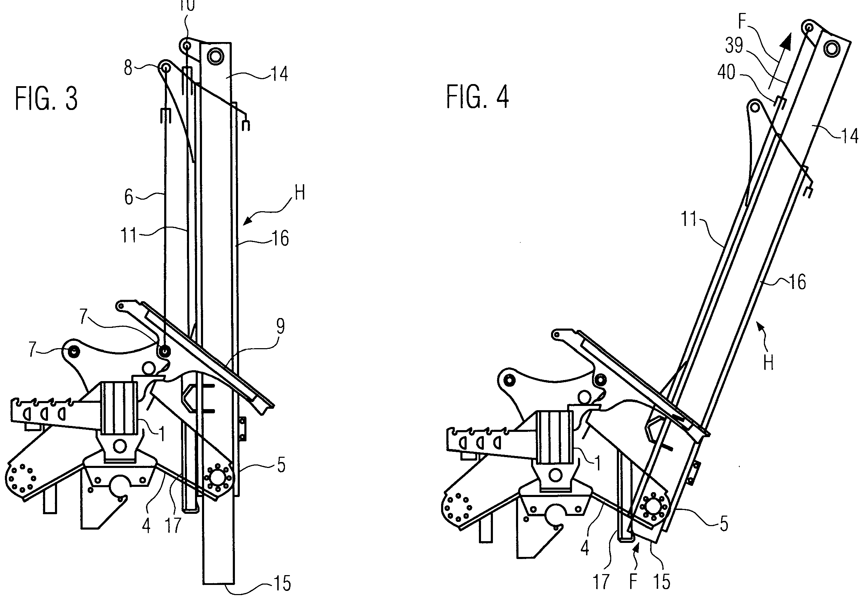

In der Transportstellung (Fig. 3) ist ein innerer Hubarmteil 14 mit seinem unteren Ende 15 in einem äußeren, im Schwenklager 5 gelagerten Hubarmteil 16 relativ zum äußeren Hubarmteil 16 und dem Tragrahmen 1 bis unter das Schwenklager 5 abgesenkt, um eine möglichst geringe Transporthöhe der Landmaschine M zu erzielen.

Zwischen einem Widerlager 9 am äußeren Hubarmteil 16 und einem Widerlager 10 am inneren Hubarmteil 14 ist wenigstens ein hier doppelt wirkend ausgebildeter Teleskopier-Zylinder 11 verbaut, mit welchem die Länge des Hubarms H bzw. der Abstand des Arbeitsgeräts W vom Schwenklager 5 veränderbar ist. Beide Zylinder 6, 11 sind sogenannte Stangenzylinder, d. h., relativ zu einem Zylindergehäuse ist eine mit einem Kolben verbundene Kolbenstange aus- und einfahrbar. Der Teleskopier-Zylinder 11 ist mit seiner Kolbenstange an dem Widerlager 10 am inneren Hubarmteil 14 angelenkt. Zur Betätigung der Hydraulikzylinder ist ein Hydraulikkreis K vorgesehen, der in Fig. 1 nicht gezeigt ist.

Fig. 2 zeigt einen Hydraulikkreis K der bekannten Landmaschine des Typs ANDEX, vertrieben unter der Marke VICON der Kverneland Group als nächstkommenden Stand der Technik. Der Hydraulikkreis K der Fig. 2 kann optional identisch oder in teilweise vereinfachter Ausbildung auch bei dem später erläuterten, erfindungsgemäßen Konzept verwendet werden.

Der in Fig. 2 gezeigte Hydraulikkreis K lässt die beiden Hubzylinder 6, beispielsweise auch einen einfach wirkenden Hydraulikzylinder 18 (am Vorgewende), und beide Teleskopier-Zylinder 11 der Hubarme H in Fig. 1 gesteuert betätigen.

Strichpunktiert ist eine Schlepper-Hydraulik 19 mit einem Richtungssteuerventil 20 gezeigt, von der der Hydraulikkreis K gespeist wird. Das Richtungssteuerventil 20 ist in dieser Ausführungsform ein 4/4-Wege-Schieberventil, das in einer offenen Neutralstellung gezeigt ist, und neben zwei Steuerstellungen auch eine gesperrte Neutralstellung umfasst. Von der Schlepper-Hydraulik 19 erstrecken sich Leitungen 21, 22 in den Hydraulikkreis K, von denen über diverse nicht näher erläuterte Ventileinrichtungen Arbeitsleitungen 23, 24 zu den beiden Teleskopier-Zylindern 11 führen.

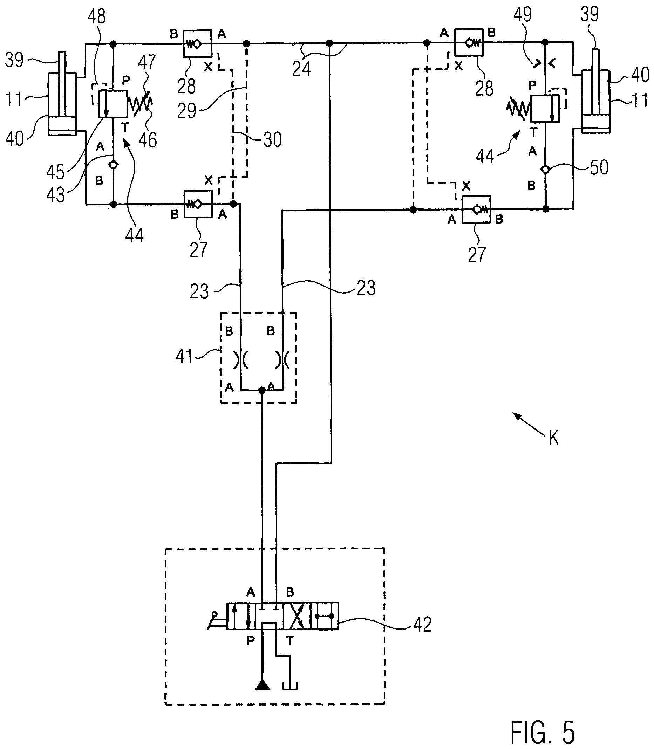

In Fig. 2 sind die beiden Teleskopier-Zylinder 11 beider Hubarme H als Masterzylinder und Slave-Zylinder geschaltet, d. h., die Arbeitsleitung 23 führt zur Kolbenseite des linken Teleskopier-Zylinders 11, hingegen die Arbeitsleitung 24 zur Kolbenstangenseite des rechten Teleskopier-Zylinders 11. Die Kolbenstangenseite des linken Teleskopier-Zylinders 11 ist über eine Leitung 25 mit der Kolbenseite des rechten Teleskopier-Zylinders 11 verbunden. Dabei kann (nicht gezeigt) der rechte Teleskopier-Zylinder 11 anders dimensioniert sein als der linke Teleskopier-Zylinder 11, damit die beiden Teleskopier-Zylinder 11 gleichzeitig und gleich schnell bewegt werden. Die Kolbenfläche des linken Teleskopier-Zylinders 11 stimmt z.B. mit der Kreisringfläche der Kolbenstangenseite des rechten überein. Diese Schaltung ist eine Option. Alternativ könnten die beiden Teleskopier-Zylinder 11 auch parallel geschaltet sein, wie dies z.B. bei der erfindungsgemäßen Lösung in Fig. 5 gezeigt ist.

Die Arbeitsleitungen 23, 24 sind durch in einem angedeuteten Block enthaltene, in Abströmrichtung sperrende Rückschlagventile 27, 28 (sogenannte Lasthalteventile) abgesichert, die überkreuz mittels Steuerleitungen 29, 30 aus jeweils einer druckbeaufschlagten Arbeitsleitung 23 oder 24 hydraulisch entsperrbar sind, um beide Teleskopier-Zylinder 11 gleichzeitig entweder ein- oder auszufahren. Sind beide Arbeitsleitungen 23, 24 drucklos, halten die sperrenden Rückschlagventile 27, 28 die Teleskopier-Zylinder 11 in der eingestellten Position. Anstelle der Rückschlagventile 27, 28 können Druckbegrenzungsventile verbaut sein.

Für bestimmte Sicherheitsfunktionen sind in dem Hydraulikkreis K in Fig. 2 insgesamt vier Endlagen-Schaltventile 31, 32, 33 und 34 vorgesehen, die hier als 2/2-Wege-Ventile ausgebildet und beispielsweise jeweils durch einen Taster oder Hebel gegen Federkraft schaltbar sind. Die Endlagen-Schaltventile 33, 34 sind beispielsweise jeweils am äußeren Hubarmteil 16 angebracht, wobei ihre Taster mit Steuerkurven 37, 38 zusammenarbeiten, die am jeweiligen inneren Hubarmteil 14 angebracht sind. Die Endlagen-Schaltventile 33, 34 sind, sofern nicht von den Steuerkurven 37, 38 zur Sperrstellung betätigt, durch Federkraft in ihre Offenstellung geschaltet. Anstelle der Endlagen-Schaltventile 31 bis 34 könnten übrigens mit einer Steuerung verknüpfte Positionsmelder oder -Sensoren verwendet werden. Die Taster der Endlagenschaltventile 31, 32, am äußeren Hubarmteil 16 werden von Steuerkurven 35, 36 am inneren Hubarmteil 14 betätigt.

Sobald der Teleskopier-Zylinder 11 den ausgefahrenen inneren Hubarmteil 14 in Richtung zum Schwenklager 5 zieht, kommt die Steuerkurve 37 an den vom Taster, sodass das Endlagen-Schaltventil 33 in seine Sperrstellung geht und der innere Hubarmteil 14 nicht mehr weiter einfahren kann. Damit wird beispielsweise eine minimale Arbeitsbreite begrenzt, mit der verhindert ist, dass die Arbeitsgeräte W miteinander oder mit anderen Komponenten kollidieren.

Wenn der Hubarm H in Richtung zur Transportstellung voll hochgeschwenkt ist, werden die Endlagen-Schaltventile 31, 32 auf Durchgang geschaltet, weil die Steuerkurven 35, 36 die Taster betätigen. Der Teleskopier-Zylinder 11 kann dann komplett eingezogen werden, damit die in Fig. 3 gezeigte Transportstellung erreicht wird. Der Hubarm H kann nur dann wieder in Richtung zur Arbeitsstellung ausgeklappt werden, wenn durch das Ausfahren des Teleskopier-Zylinders 11 das Endlagen-Schaltventil 34 auf Durchgang geschaltet wird. Bis dahin verhindert das Endlagen-Schaltventil 34, das durch die Steuerkurve 38 betätigt ist, das Ausklappen der Hubarme durch Ausfahren bzw. Freischalten der Hubzylinder 6. Damit soll sichergestellt werden, dass die Hubarme H nicht aus der Transportstellung gemäß Fig. 3 ausgeklappt werden, solange der innere Hubarmteil 14 mit seinem unteren Ende 15 noch unterhalb des Schwenklagers 5 positioniert ist.

Solche Kollisionsstellungen können bei Ausfall wenigstens eines der Endlagen-Schaltventile 31 bis 34 in Fig. 2 entstehen, und/oder durch mutwillige oder sorglose Manipulationen des Landwirts an den Ventilen im Hydraulikkreis K und/oder der Schlepper-Hydraulik 19. In einer Kollisionsstellung wird der jeweilige Teleskopier-Zylinder 11 ausgezogen, dessen Arbeitsleitungen 23, 24 durch die zwei, z. B. in einem Block 26 enthaltenen, Rückschlagventile 27, 28 gesperrt sind. Die Rückschlagventile 27, 28, die alternativ als Druckbegrenzungsventiel ausgebildet sein könnten, erfüllen die Aufgabe sogenannter Lasthalteventile, die die eingespannte Druckmittelsäule zur Kolbenseite bzw. Kolbenstangenseite des Teleskopier-Zylinders 11 halten, solange von den Leitungen 21, 22 her kein Druck ansteht, wie beispielsweise in Fig. 2. Wird in einer Kollisionssituation der Teleskopier-Zylinder 11 durch entstehende externe Kräfte ausgezogen, treten bei sperrenden Rückschlagventilen 27, 28 an der Kolbenstangenseite extreme Druckverhältnisse auf, die zu Schäden führen können.

Die Schlepper-Hydraulik weist eine Pumpe P und einen Tank T auf, die bei Betätigung des Richtungssteuerventils 20 aus einer Nullstellung wahlweise und wechselseitig mit der Leitung 21 oder der Leitung 22 verbindbar sind. Die beiden Rückschlagventile 27, 28 im Block 26 werden einzeln überkreuz hydraulisch aufgesteuert, d. h. das Rückschlagventil 27 in der Arbeitsleitung 23 aus der Leitung 21 über eine Aufsteuerleitung 29 von der Arbeitsleitung 24, hingegen das Rückschlagventil 28 in der Arbeitsleitung 24 über eine Aufsteuerleitung 30 von der Arbeitsleitung 23. Wird die Arbeitsleitung 23 aus der Leitung 22 mit Druck beaufschlagt, dann öffnet das in Abströmrichtung von den Teleskopier-Zylindern 11 sperrende Rückschlagventil 27. Beide Teleskopier-Zylinder fahren ein. Über die Aufsteuerleitung 30 wird bei aus der Leitung 21 beaufschlagter Arbeitsleitung 23 das andere Rückschlagventil 28 in der Arbeitsleitung 24 hydraulisch aufgesteuert, sodass Druckmittel von der Kolbenstangenseite des rechten Teleskopier-Zylinders 11 zum Tank T der Schlepper-Hydraulik 19 ausgeschoben wird und beide Teleskopier-Zylinder 11 ausfahren. Zum Einfahren der Teleskopier-Zylinder 11 durch Beaufschlagen der Arbeitsleitung 24 wird das Rückschlagventil 27 über die Aufsteuerleitung 29 aus der Arbeitsleitung 24 aufgesteuert, sodass Druckmittel von der Kolbenseite des rechten Teleskopier-Zylinders 11 zur Kolbenstangenseite des linken Teleskopier-Zylinders 11 und Druckmittel von der Kolbenseite des linken Teleskopier-Zylinders 11 zum Tank T ausgeschoben wird.

In der in Fig. 3 gezeigten Transportstellung eines Hubarms H ist der Hubarm H durch den Hubzylinder 6 bis in eine annähernd vertikale Lage im Schwenklager 5 hochgeschwenkt. Durch den Teleskopier-Zylinder 11 ist nachfolgend der innere Hubarmteil 14 im äußeren Hubarmteil 16 nach unten gestellt, bis das untere Ende 15 unterhalb des Schwenklagers 5 liegt.

In der Konsolenstruktur 4 ist ein tragrahmenfester Anschlag 17 verbaut, der mehrere Funktionen zu erfüllen hat. In der gezeigten Transportstellung in Fig. 3 stützt der Anschlag 17 den Hubarm H gegen Schwenkbewegungen ab, gegebenenfalls in Kombination mit dem hydraulisch blockierten Hubzylinder 6. In der beispielsweise in Fig. 1 gezeigten Arbeitsstellung bei ausgeklapptem Hubarm H, und auch in der nicht gezeigten Vorgewendestellung mit etwas angehobenem Hubarm H, begrenzt der Anschlag 17 hingegen eine minimale Arbeitsbreite, indem das untere Ende 15 des inneren Hubarmteils 14 am Anschlag 17 abgefangen wird, Kollisionen der Arbeitsgeräte W miteinander oder mit Komponenten der Landmaschine M, sind somit ausgeschlossen.

Fig. 4 verdeutlicht eine Kollisionsstellung des Hubarms H, den der freigeschaltete Hubzylinder 6 aus der Transportstellung von Fig. 3 bereits etwas nach außen klappen ließ, wobei der innere Hubarmteil 14 durch den Teleskopier-Zylinder 11 zuvor noch nicht weit genug austeleskopiert wurde, sodass das untere Ende 15 an dem Anschlag 17 anliegt. Dadurch sucht eine externe Kraft F den inneren Hubarmteil 14 weiter auszuschieben, d. h. den Teleskopier-Zylinder 11 auszuziehen. Durch diese externe Kraft F wird in Fig. 4 die Kolbenstange 39 zwangsweise aus dem Zylindergehäuse 40 ausgezogen, was zu einer exzessiven Druckerhöhung an der Kolbenstangenseite des Teleskopier-Zylinders 11 führt, die wegen des dann sperrenden Rückschlagventils 28 (siehe Fig. 2) Schaden hervorrufen könnte.

Hier setzt die erfindungsgemäße Lösung gemäß Fig. 5 an, mit der in einer Kollisionsstellung wie z. B. in Fig. 4 Schäden vermieden werden.

In Fig. 5, die eine vereinfachte Ausführungsform des Hydraulikkreises K zeigt, sind die beiden Teleskopier-Zylinder 11 parallel geschaltet, d. h. jeweils beide Arbeitsleitungen 23, 24 an die Kolbenseite und die Kolbenstangenseite jedes Teleskopier-Zylinders 11 angeschlossen. Jedem Teleskopier-Zylinder 11 sind die beiden Rückschlagventile 28, 27 mit ihren Aufsteuerleitungen 29, 30 zugeordnet. Vom Richtungs-Steuerventil 42 (z. B. ein 4/3-Wege-Schieberventil mit gesperrter Neutralstellung) führt eine Leitung zu einem Mengenteiler 41, von dem sich die Arbeitsleitungen 23 zu beiden Teleskopier-Zylindern 11 aufzweigen. Die beiden Arbeitsleitungen 24 von den Kolbenstangenseiten werden zu einer Leitung zum Richtungs-Steuerventil 42 zusammengefasst.

In der Ausführungsform in Fig. 5 ist erfindungsgemäß jedem Teleskopier-Zylinder 11 eine Überdrucksicherung 44 zugeordnet. Diese besteht aus einer Bypassleitung 43 hier z. B. zwischen den Arbeitsleitungen 23, 24 und einem in der Bypassleitung 43 angeordneten Druckbegrenzungsventil 45, das über eine Steuerleitung 48 aus der Arbeitsleitung 24 vorgesteuert ist und eine u. a. einen Ansprechdruck definierende Schließfeder 46 aufweist, die, vorzugsweise, gemäß Pfeil 47 einstellbar ist. Tritt in einer Kollisionssituation beispielsweise wie in Fig. 4 unter der externen Kraft F exzessiver Druckanstieg an der Kolbenstangenseite des Teleskopier-Zylinders 11 auf, dann spricht das Druckbegrenzungsventil 45 an und lässt Druckmittel von der Kolbenstangenseite zur Kolbenseite strömen.

Der Ansprechdruck kann höher sein als über das Richtungs-Steuerventil 42 und die Arbeitsleitung 24 zum Einfahren des Teleskopier-Zylinders 11 bewusst eingespeister Druck. Beispielsweise hat das Druckbegrenzungsventil 45 einen Ansprechdruck von etwa 250 bar, während der maximale Einspeisedruck in der Arbeitsleitung 24 bei ungefähr 200 bar liegt. Zusätzlich kann, wie angedeutet, als Option eine Blende 49 in der Bypassleitung 43 stromauf des Druckbegrenzungsventils 45 vorgesehen sein, und/oder ein Rückschlagventil 50 (sh. Fig. 5), das einen Rückstau von der Kolbenseite auf das Druckbegrenzungsventil 45 verhindert.

Wenn in der Kollisionssituation in Fig. 4 die Überdrucksicherung 44 gemäß Fig. 5 anspricht, wird der Teleskopier-Zylinder 11 ohne Schaden weiter ausgezogen, gegen Widerstand, bis schließlich das untere Ende 15 beim weiteren Ausklappen des Hubarms H bis über das Schwenklager 5 geschoben wird.

Ähnlich spricht auch beim Hochschwenken des Hubarms aus der Arbeitsstellung noch bei Anlage des Endes 15 des inneren Hubarmteils 14 am Anschlag 17 die Überdrucksicherung 44 an.

Die Überdrucksicherung 44 kann in Kombination mit den Endlagen-Schaltventilen 31 bis 34 der Fig. 2 verwendet werden. Alternativ ist es möglich, die Überdrucksicherung 44 im Hydraulikkreis K ohne jegliche Endlagen-Schaltventile der Fig. 2 vorzusehen. Denn bei in der Transportstellung gemäß Fig. 3 am Anschlag 17 anliegenden unteren Ende 15 des inneren Hubarmteils 14 klappt der Hubarm H aus der Transportstellung von Fig. 3solange nicht aus, bis das untere Ende 15 etwa auf die Position gemäß Fig. 4 gebracht wurde.

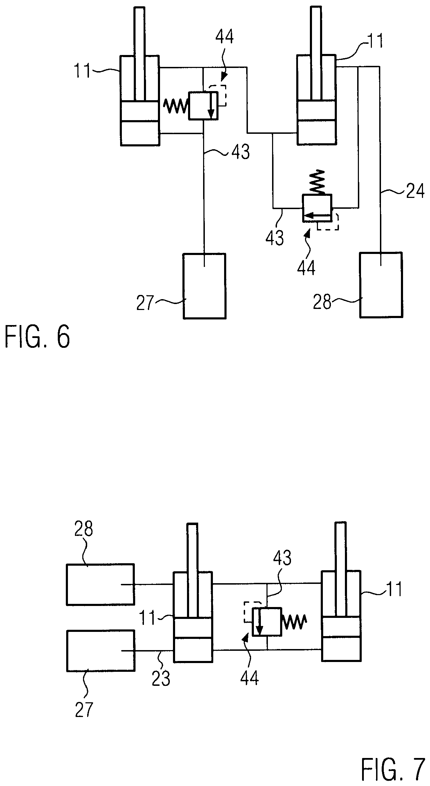

Fig. 6 verdeutlich eine an Fig. 2 insofern angenäherte Ausführungsform, als beide Teleskopier-Zylinder 11 als Master- und Slave-Zylinder geschaltet sind. Jedem Teleskopier-Zylinder 11 ist eine Überdrucksicherung 44 mit dem Bypasskanal 43 zugeordnet.

Fig. 7 verdeutlicht eine weitere Ausführungsvariante, bei der den beiden wie in Fig. 5 parallel geschalteten Teleskopier-Zylindern 11 eine gemeinsame Überdrucksicherung 44 in nur einem Bypasskanal 43 zugeordnet ist.

Alternativ könnte der Teleskopier-Zylinder 11 als Druckzylinder, z.B. mittels Umlenkung, verbaut sein, der in Kollisionsstellungen, wie z.B. in Fig. 4, unter der Kraft F eingefahren wird (nicht gezeigt).

## Patentansprüche

1. Landmaschine (M), insbesondere Heuwerbungs- oder Mähmaschine, mit
einem ein Fahrwerk (2) aufweisenden Tragrahmen (1), an welchem wenigstens ein längenverstellbarer Hubarm (H) mit einem Arbeitsgerät (W) zwischen einer abgesenkten Arbeitsstellung über eine angehobene Vorgewendestellung bis in eine voll hochgeschwenkte Transportstellung und umgekehrt schwenkbar angelenkt ist,
wenigstens einem zwischen dem Tragrahmen (1) und dem Hubarm (H) angeordneten Hubzylinder (6),
wenigstens einem zwischen inneren und äußeren, zur Längenverstellung teleskopierbaren Hubarmteilen (14, 16) angeordneten, zur Längenvergrößerung mit einer Kolbenstange (39) eines eine Kolbenseite und eine Kolbenstangenseite aufweisenden Kolbens ausfahrbaren, doppelt wirkenden Teleskopier-Zylinder (11),
und einem Hydraulikkreis (K) zumindest für die Hub- und Teleskopier-Zylinder (6, 11), wobei Arbeitsleitungen (23, 24) des Teleskopier-Zylinders (11) überkreuz hydraulisch aufsteuerbare, in Abströmrichtung aus dem Teleskopier-Zylinder (11) sperrende Rückschlagventile (27, 28) enthalten, **dadurch gekennzeichnet, dass** zwischen den Kolben- und Kolbenstangen-Seiten des Kolbens des Teleskopier-Zylinders (11) eine Bypassleitung (43) mit einer in Strömungsrichtung von der Kolbenstangenseite zur Kolbenseite druckabhängig ansprechenden Überdrucksicherung (44) vorgesehen ist.

2. Landmaschine nach Anspruch 1, **dadurch gekennzeichnet, dass** die Überdrucksicherung (44) ein von der Kolbenstangenseite vorgesteuertes Druckbegrenzungsventil (45) aufweist, dessen Ansprechdruck, vorzugsweise, einstellbar ist.

3. Landmaschine nach Anspruch 2, **dadurch gekennzeichnet, dass** der Ansprechdruck der Überdrucksicherung (44) um etwa 20 % höher ist als der Druck zum gesteuerten Beaufschlagen der Kolbenstangenseite des Teleskopier-Zylinders (11), vorzugsweise bei etwa 250 bar gegenüber 200 bar liegt.

4. Landmaschine nach Anspruch 1, **dadurch gekennzeichnet, dass** der äußere Hubarmteil (16) in einer tragrahmenfesten Konsolenstruktur (4) innen in einem etwa der halben Breite des äußeren Hubarmteils (16) entsprechenden Abstand von dem Schwenklager (5) einen Anschlag (17) aufweist, an dem bei zur Transportstellung voll hochgeschwenktem Hubarm (H) der innere Hubarmteil (14) vorbeiführbar und bei zur Arbeitsstellung oder Vorgewendestellung abgesenktem Hubarm (H) ein inneres Ende (15) des inneren Hubarmteils (14) anlegbar ist, vorzugsweise in der Arbeitsstellung oder der Vorgewendestellung zur Begrenzung einer minimalen Arbeitsbreite.

5. Landmaschine nach Anspruch 4, **dadurch gekennzeichnet, dass** in durch zumindest teilweises Ausklappen des zunächst voll hochgeschwenkten Hubarms (H) auftretenden Kollisionsstellungen der innere Hubarmteil (14) mit dem inneren Ende (15) am Anschlag (17) anlegbar und bei weiterem Ausklappen über die Überdrucksicherung (44) Druckmittel von der Kolbenstangenseite zur Kolbenseite des Teleskopierzylinders (11) verdrängbar ist.

6. Landmaschine nach wenigstens einem der vorhergehenden Ansprüche, **gekennzeichnet durch** eine Kombination aus der Überdrucksicherung (44) und Kollisionsstellungen des Hubarms an sich verhindernden Endlagen-Schaltventilen (31, 32, 33, 34) oder Positionssensoren im Hydraulikkreis (K).

7. Landmaschine nach wenigstens einem der vorhergehenden Ansprüche, **dadurch gekennzeichnet, dass** mindestens zwei gegensinnig am Tragrahmen (1) schwenkbare Hubarme (H) vorgesehen sind, dass die Teleskopier-Zylinder (11) der Hubarme (H) parallel geschaltet sind und gleichzeitig über ein Richtungssteuerventil (42) mit sperrender Neutralstellung (CC) und einen Mengenteiler (41) für die kolbenseitigen Arbeitsleitungen (23) ausfahrbar und über zusammengefasste kolbenstangenseitige Arbeitsleitungen (24) einfahrbar sind, und dass jedem Teleskopier-Zylinder (11) zwei Rückschlagventile (27, 28) und eine Überdrucksicherung (44) mit Bypassleitung (43) zugeordnet sind.

8. Landmaschine nach wenigstens einem der vorhergehenden Ansprüche, **dadurch gekennzeichnet, dass** mindestens zwei gegensinnig schwenkbar Hubarme (H) am Tragrahmen (1) vorgesehen sind, und dass sich die zwei Teleskopier-Zylinder (11) der Hubarme (H) eine gemeinsame Überdrucksicherung (44) und eine Bypassleitung (43) teilen.

9. Landmaschine nach wenigstens einem der vorhergehenden Ansprüche, **dadurch gekennzeichnet, dass** die Arbeitsgeräte (W) an den Hubarmen (H) Rechkreisel (12) oder Mäheinheiten sind.

## Claims

1. Agricultural machine (M), in particular hay raking or mowing machine, comprising a carrying frame (1) having an undercarriage (2), at which carrying frame (1) at least one length-adjustable lifting arm (H) carrying a working device (W) is linked pivotably upwardly between a lowered working position through a partially lifted position into a fully lifted transport position and vice versa,
at least one lifting cylinder (6) arranged between the carrying frame (1) and the lifting arm (H), at least one double sided actuated telescoping cylinder (11) with a piston rod (39) of a piston having a piston side and a piston rod side arranged between inner and outer length adjustable and telescopable lifting arm parts (14, 16) being extendable for increasing the length,
and a hydraulic circuit (K) at least for the lifting and telescoping cylinders (6, 11), wherein working lines (23, 24) of the telescoping cylinder (11) contain check valves (27, 28) blocking in outflow direction from the telescoping cylinder (11) and being hydraulically alternatingly openable crosswise via the working lines (23, 24), **characterized in that** a bypass line (43) having an overpressure-safety means (44) responding dependent from pressure in flow direction from the piston rod side to the piston side, the overpressure safety means (44) being arranged between the piston side and the piston rod side of the piston of the telescoping cylinder (11).

2. Agricultural machine according to claim 1, **characterized in that** the overpressure-safety means (44) comprises a pressure limiting valve (45) pilot controlled from the piston rod side, the response pressure of which, preferably, is adjustable.

3. Agricultural machine according to claim 1, **characterized in that** the response pressure of the overpressure-safety means (44) is about 20% higher than the pressure needed for a controlled actuation of the telescoping cylinder (11) at the piston rod side, and amounts preferably, to about 250 bar compared to 200 bar.

4. Agricultural machine according to claim 1, **characterized in that** the outer lifting arm part (16) comprises a stop (17) in the interior of a console structure (4) fixed to the carrying frame (1) in a distance from a pivot bearing (5) the distance corresponding to about half of the width of the outer lifting arm part (16), which stop (17) the inner lifting arm part (14) passes when the lifting arm (H) is pivoted into the transport position, and at which stop (17) an inner end (15) of the inner lifting arm part (14) abuts when the lifting arm (H) is lowered into the partially lifted position or into the working position, preferably in order to limit a minimal working width in the working position or in the partially lifted position.

5. Agricultural machine according claim 4, **characterized in that** in collision positions occurring by at least partially folding-out the first fully upwardly pivoted lifting arm (H) the inner lifting arm part (14) with its inner end (15) abuts at the stop (17), and that by further folding-out of the lifting arm (H) pressure medium is displaceable through the overpressure safety means (44) from the piston rod side to the piston side of the telescoping cylinder (11).

6. Agricultural machine according to at least one of the preceding claims, **characterized by** a combination consisting of the overpressure-safety means (44) and of end-position-switching valves (31, 32, 33, 34) hindering collision positions of the lifting arm or of position sensors in the hydraulic circuit (K).

7. Agricultural machine according to at least one of the preceding claims, **characterized in that** at least two lifting arms (H) are provided at the carrying frame (1), which lifting arms (H) can be pivoted in opposites senses, that the telescoping cylinders (11) of the lifting arms (H) are switched in parallel and can be extended simultaneously via a directional control valve (42) having a blocked neutral position (CC) and via a flow divider (41)for the piston side-working lines (23) and can be retracted simultaneously via combined piston rod side-working lines (24), and that two check valves (27, 28) and one overpressure safety means (44) with a bypass line (43) are associated to each telescoping cylinder (11).

8. Agricultural machine according to at least one of the preceding claims, **characterized in that** at least two lifting arms (H) are provided at the carrying frame (1), which lifting arms (H) can be pivoted in opposite senses, and that the two telescoping cylinders (11) of the lifting arms (H) share a common overpressure-safety means (44) and one bypass line (43).

9. Agricultural machine according to at least one of the preceding claims, **characterized in that** the working devices (W) provided at the lifting arms (H) are raking rotors (12) or mowing units.

## Revendications

1. Machine agricole (M), notamment machine de fenaison ou de fauchage, comprenant
un châssis porteur (1), qui présente un train de roulement (2), et sur lequel est articulé de manière pivotante au moins un bras relevable (H) de longueur réglable et équipé d'un outillage de travail (W), de façon à pouvoir être délacé entre une position de travail abaissée au sol jusqu'à une position de transport totalement soulevée, en passant par une position de relèvement en tournière soulevée du sol, et inversement,
au moins un vérin de relevage (6) agencé entre le châssis porteur (1) et le bras relevable (H),
au moins un vérin de déplacement télescopique (11) à double effet, qui est agencé entre des parties de bras relevable intérieure et extérieure (14, 16), se déplaçant de manière télescopique pour le réglage en longueur, et qui pour une augmentation de longueur est extractible par l'intermédiaire d'une tige de piston (39) d'un piston présentant un côté de piston et un côté tige de piston,
et un circuit hydraulique (K) au moins pour les vérins de relevage et de déplacement télescopique (6, 11), machine agricole
dans laquelle des conduites de travail (23, 24) du vérin de déplacement télescopique (11) renferment des valves antiretour (27, 28), qui bloquent dans la direction d'écoulement sortant du vérin de déplacement télescopique (11), et qui peuvent être commandées à l'ouverture, en croix, par voie hydraulique,
**caractérisée en ce qu'**il est prévu, entre le côté piston et le côté tige de piston du piston du vérin de déplacement télescopique (11), une conduite de dérivation (43) comportant un système de protection contre les surpressions (44) déclenchant en fonction de pression dans la direction d'écoulement allant du côté tige de piston vers le côté piston.

2. Machine agricole selon la revendication 1,
**caractérisée en ce que** le système de protection contre les surpressions (44) comprend une vanne de limitation de pression (45) pilotée à partir du côté tige de piston, et dont la pression de déclenchement est, de préférence, réglable.

3. Machine agricole selon la revendication 2,
**caractérisée en ce que** la pression de déclenchement du système de protection contre les surpressions (44) est environ 20% plus élevée que la pression pour l'alimentation commandée du côté tige de piston du vérin de déplacement télescopique (11), et se situe de préférence à environ 250 bar par rapport à 200 bar.

4. Machine agricole selon la revendication 1,
**caractérisée en ce que** la partie de bras relevable extérieure (16) présente, dans une structure de console (4) fixe du châssis porteur, à l'intérieur, à une distance du palier de pivotement (5), qui correspond environ à la moitié de la largeur de la partie de bras relevable extérieure (16), une butée (17) au-devant de laquelle peut passer la partie de bras relevable intérieure (14) lorsque le bras relevable (H) est basculé totalement vers le haut dans la position de transport, et contre laquelle peut venir s'appuyer une extrémité intérieure (15) de la partie de bras relevable intérieure (14) lorsque le bras relevable (H) est abaissé dans la position de travail ou dans la position de relèvement en tournière, de préférence pour limiter une largeur de travail minimale dans la position de travail ou dans la position de relèvement en tournière.

5. Machine agricole selon la revendication 4,
**caractérisée en ce que** dans des situations de collisions apparaissant par un déploiement au moins partiel du bras relevable (H) tout d'abord totalement pivoté vers le haut, la partie de bras relevable intérieure (14) peut venir s'appuyer, avec son extrémité intérieure (15), contre la butée (17), et lors de la poursuite du déploiement, du fluide de pression peut être refoulé, par l'intermédiaire du système de protection contre les surpressions (44), du côté tige de piston vers le côté piston du vérin de déplacement télescopique (11).

6. Machine agricole selon l'une au moins des revendications précédentes, **caractérisée par** une combinaison du système de protection contre les surpressions (44) et des vannes de commutation de fin de course (31, 32, 33, 34) ou des capteurs de position dans le circuit hydraulique (K) empêchant en soi des positions de collision du bras relevable.

7. Machine agricole selon l'une au moins des revendications précédentes, **caractérisée en ce que** sont prévus au moins deux bras relevables (H) pouvant pivoter de manière mutuellement opposée sur le châssis porteur (1), **en ce que** les vérins de déplacement télescopique (11) des bras relevables (H) sont montés en parallèle dans le circuit, et sont extractibles simultanément par l'intermédiaire d'une vanne de commande de direction (42) avec une position neutre de blocage (CC) et un diviseur de débit (41) pour les conduites de travail (23) côté piston, et sont rétractables par l'intermédiaire de conduites de travail (24) côté tige de piston, regroupées, et **en ce qu'**à chaque vérin de déplacement télescopique (11) sont associées deux vannes antiretour (27, 28) et un système de protection contre les surpressions (44) avec conduite de dérivation (43).

8. Machine agricole selon l'une au moins des revendications précédentes, **caractérisée en ce que** sont prévus au moins deux bras relevables (H) pouvant pivoter de manière mutuellement opposée sur le châssis porteur (1), et **en ce que** les deux vérins de déplacement télescopique (11) des bras relevables (H) se partagent un système de protection contre les surpressions (44) commun et une conduite de dérivation (43).

9. Machine agricole selon l'une au moins des revendications précédentes, **caractérisée en ce que** les outillages de travail (W) sur les bras relevables (H) sont des toupies de râteau (12) ou des unités de fauchage.
